# EUROPEAN PATENT APPLICATION

(11) **EP 1 303 147 A1**
(43) Date of publication of application: **16.04.2003**
(21) Application number: 01810993.4
(22) Date of filing: 12.10.2001
(51) Int. Cl.: H04N 17/00

(54) **Method for calibration of an electronic camera**

(71) Applicant: CSEM Centre Suisse d'Electronique et de Microtechnique SA, 2007 Neuchâtel (CH)
(72) Inventor: Seitz, Peter, 8902 Urdorf (CH)
(74) Representative: Patentanwälte Feldmann & Partner AG

(57) **Abstract**

An electronic camera (1) can be reprogrammed, recalibrated or optimized for a given application or environment by a remote expert (4) who does not have to be present locally. The camera (1) requires a bi-directional data path (25) to the expert (4), preferably using the internet, for writing parameters into the camera's program memory and for reading its acquired images. The remote expert (4) must be capable of presenting selected visual stimuli to the camera (1), which are presented by a suitable image presentation device (3) to the camera (1), under remote control by the expert (4). Thanks to the invention, a recalibration of the camera (1) is more simple, faster, at lower costs and independent of the location of the camera user.

## Description

### Field of the invention

This invention relates to programmable electronic cameras. More particularly, the invention relates to a method for the calibration of an electronic camera according to the preamble of the first claim. The invention further encompasses an arrangement for the calibration of an electronic camera, a data processing system for the calibration of an electronic camera, and a computer readable medium, having a program recorded thereon, where the program is to make a computer execute a procedure for the automatic calibration of an electronic camera, as defined in the further independent claims.

### Background of the invention

An important property of electronic cameras is that relevant parameters of the camera's acquisition and signal processing chain can be changed by modifications in firmware/software parameters or by reprogramming parts of this code. This capability makes it possible to update or to improve the camera performance without any hardware changes. Moreover, the camera behavior can be adapted to a particular application, and the camera can be optimized for a particular environment. With the emergence of complementary metal oxide semiconductor (CMOS) image sensors, even more programmable functionality is and will be available in the camera, on the sensor chips and even in the individual pixels.

Conventionally, the reprogramming of an electronic camera is carried out locally. Following a prescribed sequence of operations, the user is guided through the necessary steps of adapting some of the camera parameters or to reload it with new firmware/software. In recent years, modern telecommunication means, especially the internet, have been commercially used to ease the update process for a camera's firmware/software. The new version of the software is downloaded from the manufacturer's server onto the user's local computer, and from there it is copied into the program memory of the camera which is connected with the computer by a suitable interface. A good example of such a process was given on February 17, 2001, on the following web site: http://www.kodak.com/global/en/service/software/dc210/dc210to PlusSoftware.jhtml.

The state of the art in reprogramming electronic cameras does not allow for an adaptive behavior, in which the camera's application or its environment could be taken into account for optimized reprogramming. Currently, all of these optimizations and adaptations must be carried out locally, either by a very knowledgeable user or by an expert who had to travel to the user's location. No mechanisms are yet used or known by which the expert could reprogram, recalibrate or optimize an electronic camera without having to be present locally.

### Summary of the invention

It is an object of the invention to provide a method for the calibration of an electronic camera that avoids the disadvantages of the prior art such as described above. More specifically, the calibration should be made more simple, faster, at lower costs and independent of the location of the camera user. These and other objects are solved by the method as defined in the first claim. Preferred embodiments of the method are indicated in the dependent claims.

The invention is based upon the idea to have the camera calibrated by a remote expert who does not need to be close to the camera. The remote expert communicates with the camera via bi-directional telecommunication means, preferably electronic and/or optical telecommunication means such as the internet, a leased or switched telephone line, or an optical data link.

Consequently, the method for the calibration of an electronic camera according to the invention, the camera being located at a local site, comprises the steps of:
(a) presenting an optical stimulus to the camera;
(b) acquiring at least one image of said optical stimulus by the camera; and
(c) evaluating said at least one image.
Said at least one image is transmitted via telecommunication means from said local site to a remote site and evaluated at said remote site.

The invention further encompasses an arrangement for the calibration of an electronic camera, a data processing system for the calibration of an electronic camera, and a computer readable medium, having a program recorded thereon, where the program is to make a computer execute a procedure for the automatic calibration of an electronic camera, as defined in the further independent claims.

The arrangement for the calibration of an electronic camera according to the invention comprises
means for placing the camera located at a local site;
an image presentation device such as a video or computer monitor, a slide projector, a transparency or overhead projector, or a printed-paper projector, located at a local site;
means for evaluating an image acquired by the camera, such as an electronic controlling device; and
means for determining parameters influencing the camera properties, depending on the evaluation of said image, such as a computer.
Said image-evaluating means and said parameter-determining means are located at a site remote from said local site, and said local site and said remote site are connected by bi-directional telecommunication means, preferably electronic and/or optical telecommunication means preferably comprising a worldwide data transmission network such as the internet, a leased or switched telephone line, or an optical data link.

The data processing system for the calibration of an electronic camera includes a display and an operating system. Said data processing system comprises:
means for selecting an optical stimulus;
means for transmitting said optical stimulus via telecommunication means to the camera;
means for receiving via telecommunication means an image acquired by the camera;
means for evaluating said image;
means for determining parameters influencing the camera properties, depending on the evaluation of said image; and
means for transmitting said parameters via telecommunication means to the camera.

The computer readable medium according to the invention has a program recorded thereon, where the program is to make a computer execute procedure
to select an optical stimulus;
to transmit said optical stimulus via telecommunication means to a camera;
to receive via telecommunication means an image acquired by the camera;
to evaluate said image;
to determine parameters influencing the camera properties, depending on the evaluation of said image; and
to transmit said parameters via telecommunication means to the camera.

### Brief description of the drawings

The invention is described in greater detail hereinafter relative to the attached schematic drawings.
- Figure 1: shows a block diagram of an arrangement according to the invention.
- Figure 2: shows a flow diagram of the method according to the invention.

### Description of preferred embodiments

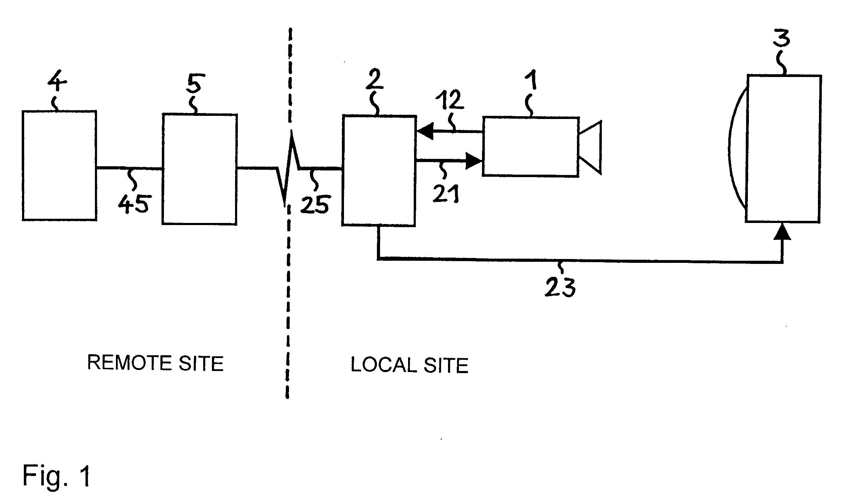

The block diagram of **Figure 1** represents an embodiment of an arrangement for the remote calibration of an electronic camera 1 according to the invention. The electronic camera 1 can send acquired image data to a local controller/interface device 2, using a custom or standard output data interface 12. The output interface 12 preferably complies with an analog video standard such as CCIR, PAL, RS-170 or NTSC (cf. P. Seitz, "Solid-State Image Sensing", in "Handbook of Computer Vision and Applications", Vol. 1, edited by B. Jähne, H. Haussecker and P. Geissler, Academic Press, 1999, p. 165-222), or with a digital interface standard such as RS-232, USB, Firewire or Ethernet (cf. L. Arnold, "Moderne Bildkommunikation", Hüthig Verlag, 1992). Some or all of the properties of the electronic camera 1 can be reprogrammed via a suitable input interface 21, which may be a custom or a standard data interface. The input interface 21 preferably complies with an industrial standard such as RS-232, I2C, USB, Firewire or Ethernet.

The local controller/interface device 2 also controls an image presentation device 3, using a custom or standard video data interface 23. The video interface 23 preferably complies with an analog video standard such as CCIR, PAL, RS-170 or NTSC, or with a digital interface standard such as RS-232, USB, Firewire or Ethernet. The image presentation device 3 is preferably a video or computer display or monitor, a slide projector, a transparency or overhead projector, or a printed-paper projector. Images are displayed by the image presentation device 3 and observed by the electronic camera 1 that is positioned in such a way as to observe the image presentation device 3.

The local controller/interface device 2 is connected to a remote controller/interface device 5, using custom or standard bi-directional telecommunication means 25. The telecommunication means 25 are preferably electronic and/or optical telecommunication means and preferably comprise a worldwide data transmission network such as the internet, a leased or switched telephone line, or an optical data link.

The remote controller/interface device 5 interacts via appropriate interaction means 45 with a "remote expert" 4. This "expert" 4 might be a human person interacting with the remote controller/interface device 5 via output and/or input means 45 such as a display or monitor, a keyboard, a mouse etc. Alternatively, possibly depending on the calibration task, the "expert" 4 might be an electronic controlling device, e.g., a computer driven by an appropriate software, that carries out an automated procedure. The "expert" 4 might as well be a combination of the above-mentioned alternatives, i.e., a human person supported by a computer-based expert system. Upon request from the local site, e.g., of the camera proprietor, the remote expert 4 causes the steps of the method according to the invention to be performed.

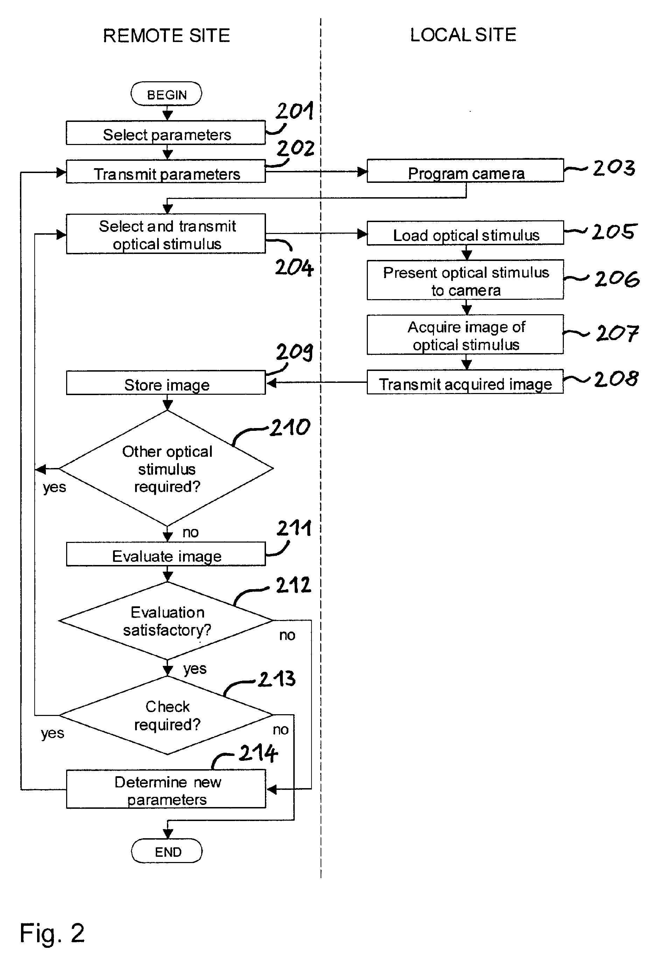

**Figure 2** shows a flow diagram of an embodiment of the method according to the invention. The boxes of the flow diagram are arranged such that the steps performed at the site of the remote expert 4 are on the left-hand side, whereas the steps performed at the site of the camera 1 are on the right-hand side. As a rule, a crossing of the dashed line symbolically separating the two sites means a transmission of data from the local controller/interface device 2 to the remote controller/interface device 5 or vice versa, via the telecommunication means 25. The embodiment shown in Fig. 2 is a rather simple one; other embodiments with further transmissions of data and/or commands between the local controller/interface device 2 to the remote controller/interface device 5 or vice versa are possible.

For (re-)calibrating the electronic camera 1, (re-)programming it or adapting it to local environments, the remote expert 4 essentially proceeds one or several times through the following steps:
(a) An optical stimulus is presented 206 to the camera 1, using the local image presentation device 3. For this purpose, the optical stimulus is preferably selected and transmitted 204 to the camera 1 by the remote expert 4; alternatively, the optical stimulus may already be situated at the local site, e.g., stored on a storage medium purchased together with the camera 1. The optical stimulus may be one single image or a series of images presented one after the other to the camera 1. The images may be selected from a database and/or instantly generated by the remote expert 4; they may be, e.g., random or pseudo-random patterns.
(b) The local camera 1 is instructed to acquire 207 one or more images of the optical stimulus that is presented 206 by the image presentation device 3. The acquired images are transmitted 208 to the remote expert 4 for evaluation and possibly stored 209 by the remote expert 4. Possibly, depending 210 on the algorithm used, the remote expert 4 may select and transmit 204 to the camera 1 further optical stimuli.
(c) The image acquired 207 and transmitted 208 by the camera 1 is evaluated 211 by the remote expert 4. The evaluation 211 may comprise, e.g., a comparison of the acquired image (instantaneous value) with a desired image (set value). Depending 212 on the results of the evaluation 211, especially if the evaluation results are unsatisfactory, the remote expert 4 may determine 214 new, optimized parameters and/or modified camera firmware/software, which are subsequently transmitted 202 to the camera 1 and installed 203 locally, e.g., written into the program memory of the camera 1. (Throughout this document, the term "parameter" denotes any data that influence any camera properties, and particularly also program codes.)

Prior to acquiring 207 the image of the optical stimulus (step (b)), the camera 1 may be programmed 203 with parameters or firmware/software of the remote expert's 4 choice 201. This step is optional in the calibration procedure if such parameters are already stored in the camera memory, e.g., by the camera manufacturer.

After a satisfactory evaluation 211 of the acquired image (step (c)), the camera 1 is preferably instructed again to acquire 207 one or more images of an optical stimulus in order to check 213 the validity of the new parameters, i.e., the new camera configuration. The image acquired 207 with the satisfactory camera parameters is transmitted 208 again to the remote expert 4 who verifies 211 that it corresponds to the intended behavior of the camera 1, i.e., the calibration or the optimization were carried out correctly.

It is possible that the determination or optimization of a certain property of the camera 1, such as its linearity, requires the acquisition 207 of several images for different optical stimuli before the evaluation 211 of the acquired imagery can be done by the remote expert 4. It is also possible that it is necessary to step through the above procedure several times in sequence, for example to optimize a certain property of the camera 1 by means of iteration.

Examples for properties of an electronic camera 1 that might need recalibration or optimization according to the present invention by employing appropriate optical stimuli include the following:
- Linearity of the camera's electronic output as a function of an object's brightness;
- Saturation behavior of the electronic camera 1, to control the maximum brightness of a scene in which the camera can still discern contrast;
- Dynamic range of the camera 1;
- Spatial resolution of the camera 1, as described for example by the camera's modulation transfer function or the cross-talk behavior;
- Temporal resolution of the camera 1, including transient effects such as the so-called "lag";
- Uniformity and fixed-pattern noise of the electronic camera 1;
- Gain and offset values of the camera output stages; or
- Spectrometric and/or colorimetric performance of an electronic color camera 1 or an imaging spectrometer.

### List of reference signs

- 1: Electronic camera
- 2: Local controller/interface device
- 3: Image presentation device
- 4: Remote expert
- 5: Remote controller/interface device

- 12: Output interface
- 21: Input interface
- 23: Video interface
- 25: Telecommunication means
- 45: Interaction means

## Claims

1. A method for the calibration of an electronic camera (1) located at a local site, comprising the steps of:
(a) presenting (206) an optical stimulus to the camera (1) ;
(b) acquiring (207) at least one image of said optical stimulus by the camera (1); and
(c) evaluating (211) said at least one image;
**characterized in that**
said at least one image is transmitted (208) via telecommunication means (25) from said local site to a remote site and evaluated (211) at said remote site.

2. The method according to claim 1, wherein said optical stimulus is transmitted (204) via telecommunication means (25) from said remote site to said local site.

3. The method according to any of the previous claims, wherein said optical stimulus comprises at least one image and is presented (206) to the camera (1) by an image presentation device (3) such as a video or computer monitor, a slide projector, a transparency or overhead projector, or a printed-paper projector, said image presentation device (3) being located at said local site.

4. The method according to any of the previous claims, wherein prior to acquiring (207) the image of said optical stimulus (step (b)), parameters influencing the camera behavior are selected (201) at said remote site and transmitted (202) via telecommunication means (25) from said remote site to said local site.

5. The method according to any of the previous claims, wherein parameters influencing the camera properties are determined (214) at said remote site, the determination (214) depending on the evaluation (211) of said at least one image (step (c)), and transmitted (202) via telecommunication means (25) from said remote site to said local site.

6. The method according to any of the previous claims, wherein the evaluation (211) of said at least one image (step (c)) results in a decision (212) whether the camera properties are satisfactory of not.

7. The method according to claim 6, wherein, in case of unsatisfactory (212) camera properties, the method according to any of the previous claims is repeated in order to determine (211) new parameters influencing the camera properties.

8. The method according to claim 6, wherein, in case of satisfactory (212) camera properties, the method according to any of the previous claims is repeated in order to verify (213) the validity of the camera configuration.

9. The method according to any of the previous claims, wherein said telecommunication means (25) are electronic and/or optical telecommunication means and preferably comprise a worldwide data transmission network such as the internet, a leased or switched telephone line, or an optical data link.

10. The method according to any of the previous claims, wherein a local controller/interface device (2) is located at said local site between the camera (1) and said telecommunication means (25), and is preferably connected to the camera (1) via an output data interface (12) and an input data interface (21).

11. The method according to claims 3 and 10, wherein said local controller/interface device (2) controls said image presentation device (3), and is preferably connected to said image presentation device (3) via a video interface (23).

12. The method according to any of the previous claims, wherein an expert (4) is located at said remote site and controls the performance of the method according to any of the previous claims, said expert (4) being a human person and/or an electronic controlling device.

13. The method according to claim 13, wherein a remote controller/interface device (5) is located at said remote site between said expert (4) and said telecommunication means (25).

14. An arrangement for the calibration of an electronic camera (1), comprising
means for placing the camera (1) located at a local site; an image presentation device (3) such as a video or computer monitor, a slide projector, a transparency or overhead projector, or a printed-paper projector, located at a local site;
means (4) for evaluating an image acquired by the camera (1), such as an electronic controlling device; and means (4) for determining parameters influencing the camera properties, depending on the evaluation of said image, such as a computer;
**characterized in that**
said image-evaluating means (4) and said parameter-determining means (4) are located at a site remote from said local site, and
said local site and said remote site are connected by bi-directional telecommunication means (25), preferably electronic and/or optical telecommunication means preferably comprising a worldwide data transmission network such as the internet, a leased or switched telephone line, or an optical data link.

15. A data processing system (4) for the calibration of an electronic camera (1), wherein said data processing system includes a display and an operating system, said data processing system (4) comprising:
means for selecting (204) an optical stimulus;
means for transmitting (204) said optical stimulus via telecommunication means (25) to the camera (1);
means for receiving (208) via telecommunication means (25) an image acquired (207) by the camera (1);
means for evaluating (211) said image;
means for determining (214) parameters influencing the camera properties, depending on the evaluation (211) of said image; and
means for transmitting (202) said parameters via telecommunication means (25) to the camera (1).

16. A computer readable medium, having a program recorded thereon, where the program is to make a computer execute procedure
to select (204) an optical stimulus;
to transmit (204) said optical stimulus via telecommunication means (25) to a camera (1);
to receive (208) via telecommunication means (25) an image acquired (207) by the camera (1);
to evaluate (211) said image;
to determine (214) parameters influencing the camera properties, depending on the evaluation (211) of said image; and
to transmit (202) said parameters via telecommunication means (25) to the camera (1).
